# EUROPÄISCHE PATENTSCHRIFT

(11) **EP 0 940 166 B1**
(45) Veröffentlichungstag und Bekanntmachung des Hinweises auf die Patenterteilung: **03.03.2004**
(21) Anmeldenummer: 98811045.8
(22) Anmeldetag: 20.10.1998
(51) Int. Cl.: B01D 53/64, B01D 53/70, B01D 53/73

(54) **Behandlung von Reststoff und Rauchgas**
Processing of residual material and fumes
Traitement de matière residuelle et des fumées

(30) Priorität: 02.03.1998 EP 98810169
(43) Veröffentlichungstag der Anmeldung: 08.09.1999
(73) Patentinhaber: CTU - Conzepte Technik Umwelt AG, 8400 Winterthur (CH)
(72) Erfinder: Jakob, Aldo, Dr., 8193 Eglisau (CH); Moergeli, Rudolf, 8708 Männedorf (CH); Dettwiler, Bernhard, Dr., 8426 Lufingen (CH)
(74) Vertreter: Sulzer Management AG

(56) Entgegenhaltungen:
- EP-A- 0 628 341
- DE-A- 4 415 719
- US-A- 5 512 257

## Beschreibung

Die Erfindung betrifft eine Behandlung von Reststoff und Rauchgas aus einer Verbrennung von chlorhaltigen Abfällen mit einem Verfahren gemäss Anspruch 1 bzw. einer Anlage gemäss Anspruch 12, sowie eine Anwendung des Verfahrens.

Bei einer Abfallverbrennung und einer anschliessenden Rauchgasreinigung entstehen Rückstände, nämlich Schlacken, Aschen, Schlämme, Filterrückstände und Flugaschen. Solche Rückstände sind in der Regel mit Schwermetallen befrachtet. Da erhöhte Schwermetallgehalte gesundheitsschädigend sind, ist es bei einer Entsorgung erforderlich, dass keine Schwermetalle (ebenso organische Stoffe wie Dioxine oder Furane) aus entsorgten Rückständen an die Umgebung freigesetzt werden. Eine sichere Entsorgung, bei der die Schwermetallgehalte der Rückstände auf ungefährliche Werte erniedrigt werden, ist aufwendig. Leichtflüchtige Schwermetalle wie Cadmium, Blei und Zink lassen sich unter reduzierenden Bedingungen und bei hohen Temperaturen bis auf geringe Reste abdampfen. Hingegen Kupfer beispielsweise ist bei einem solchen Verfahren nur zu einem kleineren Teil entfernbar.

Aus der US 5,512,257 A ist es bekannt Flugasche aus Verbrennungsanlagen zur Entfernung von Schwermetallen mit einer sauren Wässrigen Lösung, die der Waschflüssigkeit aus dem Rauchgaswäschen der Verbrennungsanlage entnommen wird, zu behandeln. Es ist Aufgabe der Erfindung, ein Verfahren zur Entfernung von Schwermetallen aus einem Reststoff zu schaffen, wobei unter der Bezeichnung "Reststoff" ein Stoffgemisch verstanden ist, das Rückstände einer Verbrennung von chlorhaltigen Abfällen umfasst. Diese Aufgabe wird durch das in Anspruch 1 definierte Verfahren gelöst. Es wird dabei die bekannte Tatsache genutzt, dass Chloride von Schwermetallen leichter in die Dampfphase übergehen als die entsprechenden Oxide.

Das Verfahren betrifft eine Behandlung von Reststoff und Rauchgas aus einer Verbrennung von chlorhaltigen Abfällen. Bei der Verbrennung entstandenes Rauchgas wird als ein erster Gasstrom einer Rauchgasreinigung zugeführt. Ein Reststoff aus der Verbrennung und/oder aus dem Verfahren wird mit einem zweiten Gasstrom - unter Nutzung des Rauchgases als Quelle von Salzsäure HCl - gemäss folgenden Teilschritten a) bis e) behandelt:
a) dem zweiten Gasstrom wird HCl zugespiesen, das direkt oder indirekt aus der Rauchgasreinigung gewonnen worden ist; b) das Gas wird auf eine für den folgenden Schritt benötigte Behandlungstemperatur erwärmt; c) das Gas wird mit dem Reststoff in Kontakt gebracht, wobei Metallchloride entstehen und schon vorhandene sowie neu entstandene Metallchloride neben weiteren flüchtigen Komponenten in die Gasphase extrahiert werden; d) das Gas wird abgekühlt und ein dabei sich bildendes Kondensat, das Metallchloride enthält, wird aus dem Gas entfernt; e) schliesslich wird das Gas der Rauchgasreinigung zugeführt.

Die abhängigen Ansprüche 2 bis 11 betreffen vorteilhafte Weiterbildungen des erfindungsgemässen Verfahrens. Gegenstand des Anspruchs 12 ist eine Anlage zur Durchführung des Verfahrens. Der Anspruch 13 schliesslich bezieht sich auf die Anwendung des Verfahrens im Hinblick auf Nutzung oder Beseitigung des behandelten Reststoffs.

Nachfolgend wird die Erfindung anhand der Zeichnungen erläutert. Es zeigen:
- Fig. 1: ein Schema zur erfindungsgemässen Reststoffbehandlung,
- Fig. 2: eine erste Modifikation zur Behandlung nach Fig.1, bei welcher der Reststoff zweistufig behandelt wird,
- Fig. 3: eine zweite Modifikation, bei welcher der Reststoff vorgewärmt wird,
- Fig. 4: eine dritte Modifikation mit Gasrückführung bei der Reststoffbehandlung und
- Fig. 5: ein Schema zu einer Teilanlage, in der HCl und Metallchloride aus dem Gas der Reststoffbehandlung separiert werden.

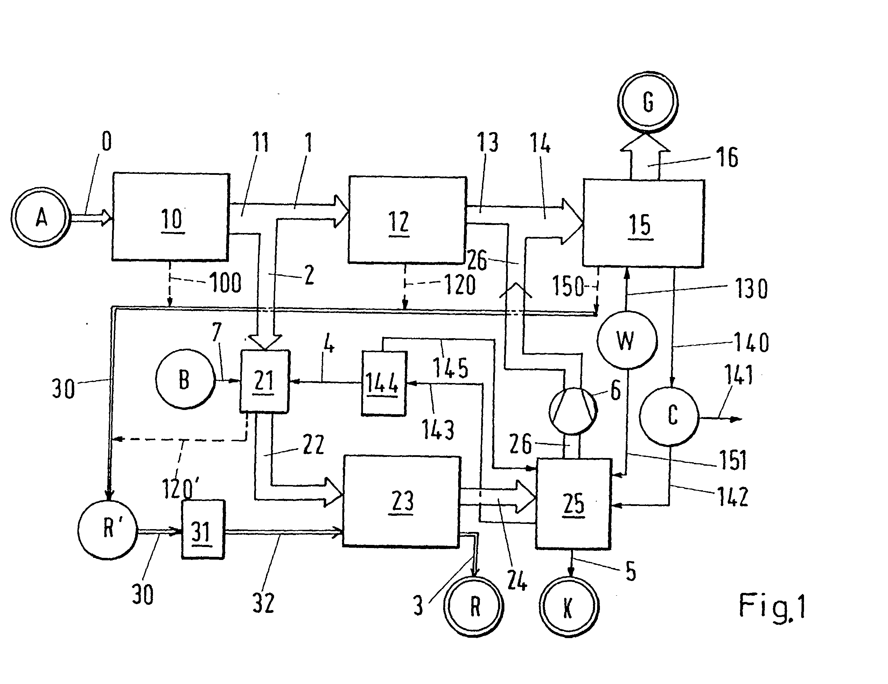

Ein zu verbrennender Abfall A, Pfeil 0, in Fig.1 muss zur Durchführung des erfindungsgemässen Verfahrens chlorhaltig sein, so dass sich bei einer Verbrennung in einem Ofen 10 Salzsäure HCl bildet, die mit Rauchgas 11 aus dem Ofen 10 abzieht. Bei der Verbrennung von Hausmüll, der oft PVC enthält, kann erwartet werden, dass auf 1 kg Abfall rund 5 g HCl entsteht. Das Rauchgas 11 wird in zwei Teilströme 1 und 2 verzweigt, wobei das Gas des ersten Teilstroms 1 einer Rauchgasreinigung 12, 15 zugeführt wird und das Gas des zweiten Teilstroms 2 dazu verwendet wird, einen Reststoff R' zu behandeln.

Die Verfahrensschritte für die Rauchgasreinigung 12, 15 sind bekannt: Eine Teilanlage 12 enthält einen Kessel, in dem die im Teilstrom 1 enthaltene thermische Energie genutzt wird (Dampferzeugung), sowie Filter, in denen Asche zurückgehalten wird. Aschen 120 aus dem Kessel und den Filtern bilden einen Teil des zu behandelnden Reststoffs R'. Nach der Teilanlage 12 wird das Rauchgas 13 des ersten Teilstroms 1 in eine Teilanlage 15 zu einer "weitergehenden Rauchgasreinigung" (nass und ohne Neutralisierung von HCl) geleitet und dort mit Wasser W (Zufuhr 130) in Kontakt gebracht. Dort entstehen weitere Rückstände 150 in Form von Schlämmen und ein Strom 140 von Abwasser C, das beispielsweise rund 5 % HCl enthält. Behandeltes Rauchgas 16 wird als gereinigtes Gas G in die Atmosphäre abgegeben.

Rostschlacken 100 aus der Verbrennung 10 und die bereits genannten Rückstände 120 sowie 150 können über einen Sammler 30 der erfindungsgemässen Behandlung zugeführt werden. Diese Rückstände, zusammenfassend mit R' bezeichnet, können auch nur Teile der angegebenen Rückstände umfassen, beispielsweise lediglich die Rückstände 120 und 150 (Aschen und Schlämme).

Bevor der zweite Teilstrom 2 für die Reststoffbehandlung verwendbar ist, muss ihm in der Teilanlage 21 Salzsäure 4 und Wärme 7 zugeführt werden. Die Salzsäure HCl wird aus der Rauchgasreinigung gewonnen und zwar direkt bei der "weitergehenden Rauchgasreinigung" oder indirekt durch Rückgewinnung bei der Reststoffbehandlung. Für den Fall, dass die durch das Rauchgas gebildete HCl-Quelle zu wenig ergiebig sein sollte, kann auch ein zusätzliches Reservoir mit Salzsäure vorgesehen sein (nicht dargestellt). Mit beispielsweise einem Brenner und Brennstoff B erfolgt eine in der Regel notwendige Temperaturerhöhung des Gases auf eine für die Behandlung benötigte Temperatur von 800 bis 1000°C, wobei diese Temperatur möglichst hoch sein soll, jedoch nur so hoch, dass der Reststoff nicht schmilzt oder zusammensintert. Mit Vorteil werden auch Feststoffe 120' - beispielsweise mit einem Zyklon - aus dem Teilstrom 2 abgetrennt und den Rückständen R' zugemischt.

Die Rückstände R' müssen in eine für die Behandlung geeignete Form gebracht werden: die Rostschlacken 100 durch mechanische Aufbereitung (Mahlen, Entschrotten und evtl. Pelletieren), die Aschen 120 und Schlämme 150 durch Granulieren. Dies geschieht in der Teilanlage 31. In einem Reaktor 23, der als Wirbelschichtreaktor oder als Drehrohrreaktor ausgebildet ist, werden präpariertes Gas 22 des zweiten Teilstroms mit dem aus der Teilanlage 31 entnommenen Reststoff 32 in Kontakt gebracht. Dabei entstehen Metallchloride und es werden schon vorhandene sowie neu entstandene Metallchloride in die Gasphase extrahiert. Gleichzeitig werden auch leichtflüchtige Stoffe wie Quecksilber Hg oder Arsen As extrahiert. Bei den im Reaktor 23 vorgesehenen Temperaturen werden auch organische Stoffe wie Dioxine und Furane thermisch abgebaut.

Das mit Metallchloriden und leichtflüchtigen Stoffen befrachtete Gas 24 wird in eine Teilanlage 25 geführt, wo es abgekühlt wird. Es bildet sich ein Metallchloride enthaltendes Kondensat 5 aus, das aus dem Gas entfernt wird und das als Produkt K nach Durchführung von Weiterbehandlungsschritten, die hier nicht beschriebenen werden, entsorgt und/oder zur Herstellung von Rohstoffen genutzt werden kann. Schliesslich wird das Gas 26 zu Reinigungszwecken dem ersten Teilstrom 13 zugeführt, wobei es mit einem Ventilator 6 abgesaugt wird. Nach der Zusammenführung tritt der Gesamtstrom 14 in die weitergehende Reinigung 15 ein.

Die Teilanlage 25 umfasst auch ein Waschen des Gases 24 und zwar mit einem Teil 142 des HCl-haltigen Wassers C aus der Reinigung 15 und wenn nötig mit Wasser W (Zufuhr 151). (Gegebenenfalls enthält ein weiterer Teil 141 des Wassers C überschüssiges HCl, das im erfindungsgemässen Verfahren nicht benötigt wird.) Aus dem gebrauchten Waschwasser 143 wird anschliessend Salzsäure HCl entfernt, mit Vorteil mittels einer Druckdestillation 144, wobei salzsäurehaltiges Wasser 145 abgetrennt und in die Teilanlage 25 rückgeführt wird. Die so gewonnene Salzsäure 4 wird in den zweiten Teilstrom 2 rückgeführt.

Der zweite Teilstrom 2 kann auch durch Verbrennungsgase des Brenners B substituiert werden. In diesem Fall bildet das gesamte Rauchgas 11 den Teilstrom 1, der der Rauchgasbehandlung 12 und 15 zugeführt wird.

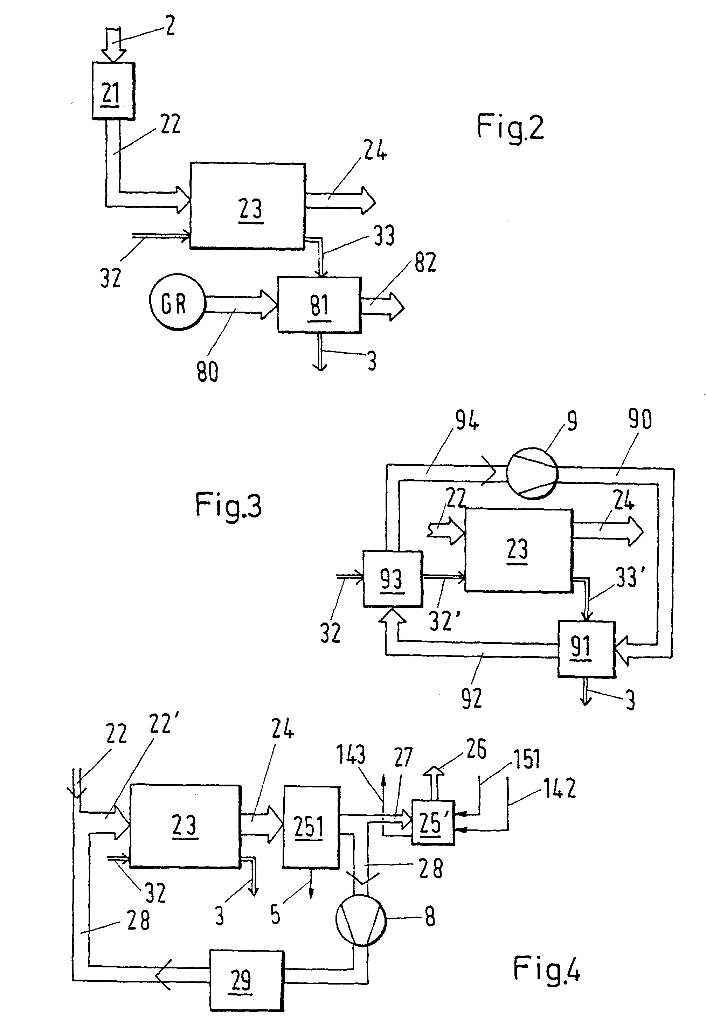

Es ist von Vorteil, wenn nach der Metallchloridentfernung der Reststoff in einer weiteren Stufe noch nachbehandelt wird. Fig.2 zeigt zu dieser Modifikation des Verfahrens einen Ausschnitt des Anlagenschemas gemäss Fig.1, der die Änderung angibt. Bei einer kontinuierlichen Behandlung des Reststoffs 33 wird dieser aus dem Reaktor 23 in einen zweiten Reaktor 81 gefördert, wo er mit einem weiteren Gasstrom 80 in Kontakt gebracht wird. Das Gas GR dieses Gasstroms 80 ist reduzierend (mit insbesondere CO als reduzierender Komponente) und enthält Wasserdampf, mit dem sich im Reststoff 32 bzw. 33 noch enthaltene Chloride zu HCl umsetzen. Der Gehalt an Chrom-VI erniedrigt sich im Reststoff durch Reduktion insbesondere zu Chrom-III (Chrom-VI ist im Vergleich zu Chrom-III deutlich giftiger sowie leichter löslich und darf daher nicht in die Umwelt freigesetzt werden). Nach Aufnahme von HCl aus den Reststoffen 33 wird der Gasstrom 82 in das Verfahren rückgeführt.

Statt einer kontinuierlichen Behandlung des Reststoffs 32 im Reaktor 23 mit anschliessender Weiterbehandlung im zweiten Reaktor 81 ist auch eine chargenweise Verfahrensweise möglich, bei der auf den zweiten Reaktor 81 verzichtet werden kann: Im Reaktor 23 wird eine vorgegebene Menge an Reststoff 32 zuerst mit HCl-haltigem, dann mit reduzierendem und Wasserdampf enthaltenden Gas behandelt und anschliessend der Reaktorinhalt gewechselt.

Vorteilhaft ist es auch, wenn der Reststoff 32 vor dessen Behandlung vorgewärmt wird und/oder wenn aus dem im Reaktor 23 behandelten Reststoff 33' Wärme rückgewonnen wird. Dies wird anhand eines Beispiels in Fig.3 erläutert, wobei Fig.3 wieder wie Fig.2 einen Ausschnitt eines Anlagen- oder Verfahrenschemas darstellt. Ein Gasstrom 90, angetrieben durch einen Ventilator 9, dient als Wärmeträgermedium und nimmt in einer Wärmetauschvorrichtung 91 Wärme aus dem heissen Reststoff 33' (rund 900°C) auf. Der abgekühlte Reststoff 3 bildet das Produkt R (vgl. Fig.1). Der heisse Gasstrom 92 erwärmt in einer weiteren Wärmetauschvorrichtung 93 den kalten Reststoff 32 (auf rund 400°C) und wird als abgekühlter Strom 94 vom Ventilator 9 abgesaugt.

Bei der in Fig.4 gezeigten Modifikation wird der Gasstrom 24 des zweiten Teilstroms 2 nach der Abscheidung des Kondensats 5 in einem Kühler 251 zu einem grossen Teil als HCl-haltiger Strom 28 und mit einem Ventilator 8 zum Eingang des Reaktors 23 rückgeführt, wo er mit dem Gas 22 aus der Einrichtung 21 (siehe Fig. 1) vermischt (22') wird. In einer Heizeinrichtung 29 muss die Temperatur des rückgeführten Gases 28 auf die Reaktionstemperatur (rund 900°C) erhöht werden. Der nicht rückgeführte Teil 27 des Gases wird der bereits beschriebenen Wäsche (neues Bezugszeichen 25') mit Wasser 151 sowie HCl-haltigem Abwasser 142 zugeführt. Aus dem Strom 143 mit dem gebrauchten Waschwasser wird anschliessend HCl rückgewonnen.

Die Heizeinrichtung 29 kann auch mit der Anlagenkomponente 21 identisch sein, in der die Aufheizung des Gasstroms 22 mit dem Brenner B erfolgt.

Die im Kühler 251 für die Kondensatbildung abzuführende thermische Energie kann zu einer Dampferzeugung genutzt werden.

Der behandelte Reststoff R hat zementartige Eigenschaften und kann daher in der Bauindustrie, beispielsweise als Zuschlagstoff von Zement, genutzt werden. Er kann selbstverständlich auch auf einer Deponie entsorgt werden.

Die vorzusehende Dauer für die Behandlung des Reststoffs R' bei 800 bis 1000°C im Reaktor 23 hängt unter anderem von der Konzentration des HCl im Gas 22 ab. Bei einer HCl-Konzentration von 2% wird eine Behandlungsdauer von rund zwei bis vier Stunden benötigt. Bei einer Erhöhung der HCl-Konzentration verkürzt sich die benötigte Behandlungsdauer und/oder es entsteht mehr Metallchlorid. Die Chloridbildung hängt auch von den im Reststoff enthaltenen Metallen ab. Es ist daher im Einzelfall empirisch und im Bezug auf Vorgaben hinsichlich zulässigen Metallresten zu bestimmen, wie gross die Parameter Behandlungsdauer und HCl-Konzentration zu wählen sind. Wie die Erfahrung gezeigt hat, ist eine HCl-Konzentration von 10% besonders vorteilhaft.

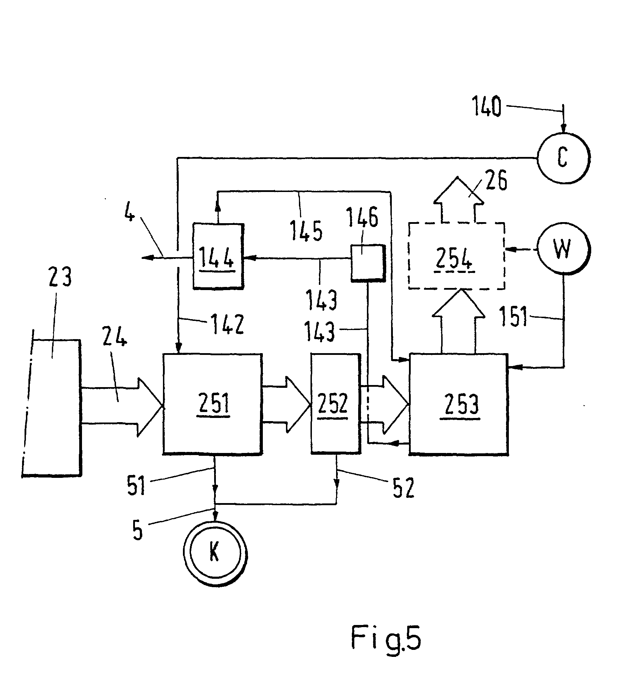

Die Teilanlage 25 in Fig.1 umfasst verschiedene Komponenten, beispielsweise die in Fig.5 angegebenen: einen partiellen Quench 251, einen Filter 252, einen weiteren Quench 253 und optional einen Wäscher 254. Aus dem Reservoir C wird HCl-haltiges Wasser 142 in den partiellen Quench 251 eingespeist. Aus diesem und dem Filter 252 wird Schwermetalle enthaltendes Kondensat 5 bzw. 51 und 52 entnommen. Aus dem Quench 253 mit der Wasserzufuhr 151 und mittels der HCl-Aufkonzentrierung 144 (Verbindungen 143 und 145) wird HCl 4 rückgewonnen. Mit Vorteil ist ein Ionentauscher 146 für Hg in der Verbindungsleitung 143 vorgesehen. Das resultierende HClarme Gas 26 wird in die Rauchgasreinigung 15 (siehe Fig.1) geleitet.

Bei der Reststoffbehandlung, die anhand der Fig. 1 erläutert worden ist, erfolgt die Erwärmung 7 des zweiten Teilstroms 2 auf eine Temperatur, bei der Metallchloride aus dem Reststoff R' extrahiert werden können. Es kann vorteilhaft sein, wenn ein kohlenstoffhaltiger Brennstoff zur Wärmeerzeugung dem Reststoff R' zugemischt wird (in den Figuren nicht dargestellt). Die Wärmeabgabe 7 an den zweiten Gasstrom 2 lässt sich verringern, wobei diese Verringerung der Menge an zugemischtem Brennstoff entspricht; im Extremfall kann die Wärmeabgabe 7 auch unterbleiben, wenn das bei der Verbrennung 10 entstandene Rauchgas eine Temperatur von mindestens 900°C hat. Da die Rauchgastemperatur in der Regel variabel ist, kann es notwendig sein, eine regelbare Wärmezufuhr 7 zum zweiten Gasstrom 2 vorzusehen. Der zur Wärmeerzeugung zugemischte Brennstoff kann Aktivkohle sein, die zu entsorgen ist und die beispielsweise als Mittel zur Absorption von Quecksilber aus Abgasen verwendet worden ist. Weitere Beispiele für mögliche Brennstoffe sind: Herdofenkoks oder ein organischer Abfall wie Klärschlamm oder Säureteer.

Die Behandlung des Reststoffs 33 nach der Metallchloridextraktion 23 - siehe Fig. 2 - kann statt in einem einzigen Schritt, nämlich im Reaktor 81, auch in zwei separaten Schritten durchgeführt werden: In einem der Metallchloridextraktion 23 folgenden Schritt werden Chloride, die im Reststoff 33 enthalten sind, in feuchter Atmosphäre zu HCl umgesetzt. In einem weiteren Schritt kann mit einem reduzierenden Gasstrom, der beispielsweise CO oder Erdgas enthält, im Reststoff 33 enthaltenes Chrom-VI reduziert und dabei insbesondere zu Chrom-III umgesetzt werden. Die Reduktion kann mit einem Gas durchgeführt werden, dessen Temperatur kleiner als jene des zu behandelnden Reststoffs ist. Die Reduktion kann somit gekoppelt mit einer Abkühlung des Reststoffs durchgeführt werden.

## Patentansprüche

1. Verfahren zur Behandlung von Reststoff und Rauchgas aus einer Verbrennung (10) von chlorhaltigen Abfällen (A), in welchem Verfahren bei der Verbrennung entstandenes Rauchgas (11) als ein erster Gasstrom (1) einer Rauchgasreinigung (12, 15) zugeführt wird und ein Reststoff (R', 32) aus der Verbrennung und/oder aus dem Verfahren mit einem zweiten Gasstrom (2) - unter Nutzung des Rauchgases als Quelle von Salzsäure HCl - gemäss folgenden Teilschritten (21, 23, 25) behandelt wird:
a) dem zweiten Gasstrom (2) wird HCl zugespiesen (21), das direkt oder indirekt aus der Rauchgasreinigung gewonnen worden ist;
b) das Gas (2) wird auf eine für den folgenden Schritt (23) benötigte Behandlungstemperatur erwärmt (21) ;
c) das Gas (2, 22) wird mit dem Reststoff (32) in Kontakt gebracht (23), wobei Metallchloride entstehen und schon vorhandene sowie neu entstandene Metallchloride neben weiteren flüchtigen Komponenten in die Gasphase extrahiert werden;
d) das Gas (2, 24) wird abgekühlt und ein dabei sich bildendes Kondensat (5 ,K), das Metallchloride enthält, wird aus dem Gas entfernt (25);
e) schliesslich wird das Gas (2, 26) der Rauchgasreinigung zugeführt.

2. Verfahren nach Anspruch 1, **dadurch gekennzeichnet, dass** das bei der Verbrennung entstandene Rauchgas (11) in zwei Teilströme (1, 2) verzweigt wird, wobei das Gas (1) des ersten Teilstroms direkt der Rauchgasreinigung zugeführt wird und das Gas (2) des zweiten Teilstroms als zweiter Gasstrom für die Reststoffbehandlung verwendet wird.

3. Verfahren nach Anspruch 1 oder 2, **dadurch gekennzeichnet, dass** das Gas (2, 24) des zweiten Gasstroms nach der Entfernung des Kondensats (K) gewaschen wird, dieses Waschen mit HCl-haltigem Wasser (C, 142) aus der Rauchgasreinigung (15) durchgeführt wird, aus dem gebrauchten Waschwasser (143) anschliessend HCl entfernt wird - insbesondere mittels einer Druckdestillation (144) - und das so gewonnene HCl (4) vor der Reststoffbehandlung (23) in den zweiten Gasstrom (2) rückgeführt wird.

4. Verfahren nach einem der Ansprüche 1 bis 3, **dadurch gekennzeichnet, dass** nur ein Teil (27) des zweiten Gasstroms (2) der Wäsche zugeführt wird und dass der andere Teil (28) nach Aufheizen auf die benötigte Behandlungstemperatur in den zweiten Gasstrom (2, 22) vor der Reststoffbehandlung (23) rückgeführt wird.

5. Verfahren nach einem der Ansprüche 1 bis 4, **dadurch gekennzeichnet, dass** der zweite Gasstrom (2, 26) nach der Wäsche (25, 252) abgesaugt wird.

6. Verfahren nach einem der Ansprüche 1 bis 5, **dadurch gekennzeichnet, dass** der Reststoff (33) nach der Metallchloridextraktion (23) in einem weiteren Schritt (81) mit einem reduzierenden Gasstrom (GR, 80), der insbesondere CO enthält, in Kontakt gebracht wird, so dass gegebenenfalls der Gehalt an Chrom-VI im Reststoff (3) - durch Reduktion insbesondere zu Chrom-III - erniedrigt wird, dass mit dem reduzierenden Gasstrom, der zusätzlich Wasserdampf enthält, im Reststoff (33) enthaltene Chloride zu HCl umgesetzt werden, und dass der Gasstrom (82) nach Aufnahme von HCl aus den Reststoffen in das Verfahren rückgeführt wird, wobei dieser Verfahrensschritt (81) kontinuierlich oder chargenweise durchgeführt wird.

7. Verfahren nach einem der Ansprüche 1 bis 6, **dadurch gekennzeichnet, dass** der erste Teilstrom (1) nach Durchgang durch Filter sowie nach Nutzung von in ihm enthaltener thermischer Energie (12) einer weitergehenden Rauchgasreinigung (15) zugeführt wird und dass der zweite Gasstrom (2, 26) nach der Reststoffbehandlung (23) ebenfalls der weitergehenden Rauchgasreinigung (15) zugeführt wird.

8. Verfahren nach einem der Ansprüche 1 bis 7, **dadurch gekennzeichnet, dass** im zweiten Gasstrom (2, 251) bei der für die Kondensatbildung (5) benötigten Abkühlung die abgeführte thermische Energie beispielsweise zu einer Dampferzeugung genutzt wird.

9. Verfahren nach einem der Ansprüche 1 bis 8, **dadurch gekennzeichnet, dass** der Reststoff (32) vor dessen Behandlung vorgewärmt wird und/oder dass aus dem behandelten Reststoff (33') Wärme rückgewonnen wird.

10. Verfahren nach einem der Ansprüche 1 bis 9, **dadurch gekennzeichnet, dass** dem Reststoff (R', 32) vor der Metallchloridextraktion (23) ein kohlenstoffhaltiger Brennstoff zur Wärmeerzeugung zugemischt wird und dass die Wärmeabgabe (7) an den zweiten Gasstrom (2) vor der Metallchloridextraktion entsprechend der Menge des zugemischten Brennstoffs verringert oder ganz unterlassen wird.

11. Verfahren nach einem der Ansprüche 1 bis 10, **dadurch gekennzeichnet, dass** in einem der Metallchloridextraktion (23) folgenden Schritt Chloride, die im Reststoff (33) enthalten sind, in feuchter Atmosphäre zu HCl umgesetzt werden und dass separat in einem weiteren Schritt mit einem reduzierenden Gasstrom, der beispielsweise CO oder Erdgas enthält, gegebenenfalls im Reststoff enthaltenes Chrom-VI reduziert wird, insbesondere zu Chrom-III reduziert wird.

12. Anlage zur Durchführung des Verfahrens gemäss einem der Ansprüche 1 bis 11, **dadurch gekennzeichnet, dass** sie eine erste Teilanlage (12, 15) für eine Rauchgasreinigung sowie eine zweite Teilanlage (21, 23, 25) mit einem Reaktor (23) für eine Reststoffbehandlung umfasst und dass der genannte Reaktor als ein Wirbelschichtreaktor oder als ein Drehrohrreaktor ausgebildet ist.

13. Anwendung des Verfahrens gemäss einem der Ansprüche 1 bis 11, **dadurch gekennzeichnet, dass** aus einem Reststoff, der Rückstände einer Abfallverbrennung, insbesondere Rostschlacken und/oder Flugaschen sowie Schlämme, umfasst, chloridbildende Schwermetalle und weitere Metalle wie beispielsweise Hg extrahiert werden, wobei die Reststoffbehandlung bei einer Temperatur von rund 800 - 1000°C und einem HCl-Gehalt des Gases von vorzugsweise rund 10% durchgeführt wird, und dass der behandelte Reststoff genutzt - beispielsweise als Zuschlagstoff von Zement - oder in einer Deponie entsorgt wird.

## Claims

1. Method for the treatment of residual matter and smoke gas from an incineration (10) of refuse (A) containing chlorine, in which method smoke gas (11) which arose in the incineration is supplied as a first gas flow (1) to a smoke gas cleansing operation (12, 15) and a residual matter (R', 32) from the incineration and/or from the method is treated with a second gas flow (2) - using the smoke gas as a source of hydrochloric acid HCl - in accordance with the following partial steps (21, 23, 25):
a) HCl which is won directly or indirectly from the smoke gas cleansing operation is fed (21) into the second gas flow (2);
b) the gas (2) is heated (21) to a treatment temperature which is required for the next step (23);
c) the gas (2, 22) is brought into contact (23) with the residual matter (32), with metal chlorides arising and with the metal chlorides which are already present as well as those newly arising being extracted in addition to further volatile components into the gas phase;
d) the gas (2, 24) is cooled down and a condensate (5, K) thereby forming, which contains metal chlorides, is removed from the gas (25);
e) finally, the gas (2, 26) is supplied to the smoke gas cleansing operation.

2. Method in accordance with claim 1, **characterised in that** the smoke gas (11) arising in the incineration is branched into two partial flows (1, 2), with the gas (1) of the first partial flow being supplied directly to the smoke gas cleansing operation and the gas (2) of the second partial flow being used as a second gas flow for the treatment of the residual matter.

3. Method in accordance with claim 1 or claim 2 **characterised in that** the gas (2, 24) of the second gas flow is washed after the removal of the condensate (K); **in that** this washing is carried out with water (C, 142) which contains HCl from the smoke gas cleansing operation (15); **in that** HCl is subsequently removed from the used washing water ( 143) - in particular by means of a pressure distillation (144) - and **in that** the thus obtained HCl (4) is fed back into the second gas flow (2) upstream of the residual matter treatment operation (23).

4. Method in accordance with one of the claims 1 to 3 **characterised in that** only a part (27) of the second gas flow (2) is supplied to the washing operation; and **in that** the other part (28) is fed back into the second gas flow (2, 22) upstream of the residual matter treatment operation (23).

5. Method in accordance with one of the claims 1 to 4 **characterised in that** the second gas flow (2, 26) is sucked off after the washing operation (25, 252).

6. Method in accordance with one of the claims 1 to 5 **characterised in that** after the metal chloride extraction (23) the residual matter (33) is brought in a further step (81) into contact with a reducing gas flow (GR, 80), which in particular contains CO, so that where appropriate the content of chromium-VI in the residual matter (3) is reduced - in particular by reduction to chromium-III - **in that** chlorides which are contained in the residual matter (33) are converted to HCl with the reducing gas flow, which additionally contains water vapour; and **in that** the gas flow (82), after taking up HCl from the residual matter, is fed back into the process, with this process step (81) being carried out continuously or batchwise.

7. Method in accordance with one of the claims 1 to 6 **characterised in that** the first partial flow (1), after passage through a filter and the utilisation of thermal energy (12) contained in it, is supplied to a further-going smoke gas cleansing operation (15); and **in that** the second gas flow (2, 26) is likewise supplied to the further-going smoke gas cleansing operation (15) after the residual matter treatment operation (23).

8. Method in accordance with one of the claims 1 to 7 **characterised in that**, in the second gas flow (2, 251), during the cooling down required for the formation of the condensate (5), the thermal energy carried off is used for example for the production of a vapour.

9. Method in accordance with one of the claims 1 to 8 **characterised in that** the residual substance (32) is preheated prior to its treatment and/or that heat is recovered from the treated residual matter (33').

10. Method in accordance with one of the claims 1 to 9 **characterised in that** a fuel containing carbon is admixed to the residual matter (R', 32) prior to the metallic chloride extraction operation (23) for the production of heat; and **in that** the heat transfer (7) to the second gas flow (2) is reduced corresponding to the amount of the admixed fuel prior to the extraction of metallic chlorides or is omitted entirely.

11. Method in accordance with one of the claims 1 to 10 **characterised in that**, in a step following the metallic chloride extraction operation (23), chlorides which are contained in the residual substance (33) are converted to HCl in a moist atmosphere; and **in that** chromium-VI which is possibly contained in the residual substance is separately reduced in a further step with a reducing gas flow, which for example contains CO or natural gas, and is in particular reduced to chromium-III.

12. Plant for carrying out the method in accordance with one of the claims 1 to 11 **characterised in that** it comprises a first partial plant (12, 15) for a smoke gas cleansing operation and a second partial plant (21, 23, 25) with a reactor (23) for a residual matter treatment operation; and **in that** the named reactor is designed as a fluidised bed reactor or as a rotary reactor.

13. Use of the method in accordance with one of the claims 1 to 11 **characterised in that** chloride-forming heavy metals and further metals such as for example Hg are extracted from a residual matter which comprises residues of a refuse incineration operation, in particular grate slags and/or flue ashes and also sludges, with the residual matter treatment being carried out at a temperature of about 800 - 1000°C and at an HCl content of the gas of preferably about 10%; and **in that** the treated residual matter is used
- for example as an aggregate for cement - or is disposed of in a dump.

## Revendications

1. Procédé pour le traitement de matière résiduelle et de fumées provenant d'une combustion (10) de déchets chlorés ( (A), procédé dans lequel les fumées produites lors de la combustion (11) sont amenées sous forme d'un premier courant de gaz (1) dans un épurateur de fumées (12, 15) et une matière résiduelle (R', 32) provenant de l'installation de combustion et/ou du procédé est traitée avec un second courant de gaz (2) - en utilisant les fumées comme source d'acide chlorhydrique HCl - suivant les étapes partielles suivantes (21, 23, 25) :
a) le HCl, qui a été extrait directement ou indirectement de l'épurateur de fumées (12, 15), est alimenté (21) dans le second courant de gaz (2);
b) le gaz (2) est réchauffé (21) à une température de traitement nécessaire pour l'étape suivante (23);
c) le gaz (2, 22) est mis en contact avec la matière résiduelle (32), des chlorures métalliques se formant et les chlorures métalliques déjà présents ainsi que des chlorures métalliques nouvellement produits étant extraits dans la phase gazeuse en présence d'autres composants volatils;
d) le gaz (2, 24) est refroidi et un condensat (5, K) se formant à cette occasion, qui contient des chlorures métalliques, est éliminé (25) du gaz;
e) finalement, le gaz (2, 26) est amené à l'épurateur de fumées.

2. Procédé selon la revendication 1, **caractérisé en ce que** les fumées produites pendant la combustion (11) sont divisées en deux courants partiels (1, 2), le gaz (1) du premier courant partiel étant amené directement à l'épurateur de fumées et le gaz (2) du second courant partiel étant utilisé comme second courant de gaz pour le traitement de la matière résiduelle.

3. Procédé selon la revendication 1 ou 2, **caractérisé en ce que** le gaz (2, 24) du second courant de gaz est lavé après l'élimination du condensat (K), ce lavage est réalisé avec de l'eau contenant du HCl (C, 142) provenant de l'épurateur de fumées (15), le HCl est ensuite éliminé de l'eau de lavage usée (143) - en particulier à l'aide d'une distillation sous pression (144) - et le HCl ainsi extrait (4) est ramené dans le second courant de gaz (2) avant le traitement de la matière résiduelle (23).

4. Procédé selon l'une quelconque des revendications 1 à 3, **caractérisé en ce que** seulement une partie (27) du second courant de gaz (2) est amenée au lavage et **en ce que** l'autre partie (28) est ramenée dans le second courant de gaz (2, 22) après réchauffage à la température de traitement nécessaire, avant le traitement de la matière résiduelle (23).

5. Procédé selon l'une quelconque des revendications 1 à 4, **caractérisé en ce que** le second courant de gaz (2, 26) est aspiré après le lavage (25, 252).

6. Procédé selon l'une quelconque des revendications 1 à 5, **caractérisé en ce que** la matière résiduelle (33) est mise en contact avec un courant de gaz réducteur (GR, 80), qui contient en particulier du CO, après l'extraction des chlorures métalliques (23) au cours d'une autre étape (81), de sorte que, le cas échéant, la teneur en chrome (VI) dans la matière résiduelle (3) est réduite - par réduction, en particulier en chrome (III) -, **en ce que** les chlorures contenus dans la matière résiduelle (33) sont convertis en HCl avec le courant de gaz réducteur, qui contient, en outre, de la vapeur d'eau, et **en ce que** le courant de gaz (82) est ramené dans le procédé après l'absorption du HCl hors des matières résiduelles, cette étape de procédé (81) étant réalisée de manière continue ou discontinue.

7. Procédé selon l'une quelconque des revendications 1 à 6, **caractérisé en ce que** le premier courant partiel (1) est amené à un épurateur de fumées (15) plus poussé après un passage à travers des filtres et après l'utilisation de l'énergie thermique (12) qu'il contient et **en ce que** le second courant partiel (2) est également amené à l'épurateur de fumées (15) plus poussé après le traitement de la matière résiduelle (23).

8. Procédé selon l'une quelconque des revendications 1 à 7, **caractérisé en ce que** l'énergie thermique extraite dans le second courant de gaz (2, 251) lors du refroidissement nécessaire pour la formation du condensat (5) est utilisée, par exemple, pour une production de vapeur.

9. Procédé selon l'une quelconque des revendications 1 à 8, **caractérisé en ce que** la matière résiduelle (32) est réchauffée avant son traitement et/ou **en ce que** de la chaleur est récupérée à partir de la matière résiduelle traitée (33').

10. Procédé selon l'une quelconque des revendications 1 à 9, **caractérisé en ce qu'**un combustible carboné est mélangé à la matière résiduelle (R', 32), avant l'extraction des chlorures métalliques (23), pour la production de chaleur et **en ce que** la transmission de chaleur (7) au second courant de gaz (2) avant l'extraction des chlorures métalliques est réduite ou totalement supprimeé en fonction de la quantité de combustible mélangé.

11. Procédé selon l'une quelconque des revendications 1 à 10, **caractérisé en ce que**, au cours d'une étape suivant l'extraction des chlorures métalliques (23), les chlorures qui sont contenus dans la matière résiduelle (33) sont convertis en HCl sous atmosphère humide et **en ce que** séparément, au cours d'une autre étape, le chrome(VI) éventuellement contenu dans la matière résiduelle est réduit avec un courant de gaz réducteur, qui contient par exemple du CO ou du gaz naturel, en particulier est réduit en chrome (III).

12. Installation pour la réalisation du procédé selon l'une quelconque des revendications 1 à 11, **caractérisée en ce qu'**elle comprend une première section d'installation (12, 15) pour une épuration des fumées ainsi qu'une seconde section d'installation (21, 2, 25 avec un réacteur (23) pour un traitement de la matière résiduelle et **en ce que** le réacteur mentionné est conçu comme un réacteur à combustible fluidisé ou comme un réacteur tubulaire rotatif.

13. Application du procédé selon l'une quelconque des revendications 1 à 11, **caractérisée en ce que**, à partir d'une matière résiduelle qui contient des résidus d'une installation d'incinération de déchets, en particulier des scories de mâchefer et/ou des cendres volantes ainsi que des boues, des métaux lourds formant des chlorures et d'autres métaux, comme par exemple du Hg, sont extraits, le traitement de la matière résiduelle étant réalisé à une température d'environ 800 °C - 1000°C et avec une teneur en HCl du gaz d'environ 10%, de préférence, et **en ce que** la matière résiduelle traitée est utilisée - par exemple comme adjuvant du ciment - ou éliminée dans une décharge de déchets.
